Europäisches Patentamt

European Patent Office

Office européen des brevets

(11) Numéro de publication: **0 117 770 B1**

## FASCICULE DE BREVET EUROPEEN

(45) Date de publication de fascicule du brevet:
**07.08.91**

(21) Numéro de dépôt: **84400072.9**

(22) Date de dépôt: **13.01.84**

(51) Int. Cl.⁵: **B32B 17/10**, C03C 27/12,
B32B 31/00

(54) Vitrage composite de protection contre les chocs et les balles et procédés de fabrication.

(30) Priorité: 04.02.83 FR 8301751
21.09.83 FR 8314988

(43) Date de publication de la demande:
05.09.84 Bulletin 84/36

(45) Mention de la délivrance du brevet:
07.08.91 Bulletin 91/32

(84) Etats contractants désignés:
BE CH DE GB IT LI NL SE

(56) Documents cités:
EP-A- 0 085 602     FR-A- 2 134 255
FR-A- 2 160 389     FR-A- 2 310 979
FR-A- 2 443 755     GB-A- 2 104 838
US-A- 2 084 113     US-A- 3 891 486
US-A- 4 046 951     US-A- 4 121 014

(73) Titulaire: **SOLAR CONTROL FRANCE Société
à responsabilité limitée dite:
24, Rue Louis Blanc
F-75010 Paris(FR)**

(72) Inventeur: **Anastasie, Maurice Gustave Eugène
4, rue Changarnier
F-75012 Paris(FR)**

(74) Mandataire: **Vander-Heym, Roger
172 Boulevard Voltaire
F-75011 Paris(FR)**

Rank Xerox (UK) Business Services

## Description

La présente invention est relative à un vitrage composite de protection contre les chocs et les balles, du genre de ceux constitués par l'association de plaques de verre, d'une feuille de matière plastique et d'une plaque de polycarbonate.

Dans la demande de brevet Européen n° 41 090, au nom de la demanderesse, on a décrit un tel vitrage comportant, en outre, une feuille de polyester entre le verre et le polycarbonate.

La feuille de polyester était collée contre la plaque de polycarbonate à l'aide d'une résine acrylique et contre le verre à l'aide d'une feuille de butyral de polyvinyle ou PVB.

Après de nombreux essais on a constaté que la fixation de la feuille de polyester à l'aide de PVB n'était pas satisfaisante car il était délicat de faire adhérer parfaitement le PVB à la feuille de polyester.

Par ailleurs, on a constaté aussi que, lors du calendrage de l'ensemble pour faire adhérer le PVB au verre et à la plaque de polycarbonate, celle-ci avait tendance à se déformer.

Dans le document FR-A-2134255 on décrit un verre feuilleté susceptible de se déformer sous l'action d'un choc.

Dans le document US-A-4.046 951 on décrit un verre armé comportant des plaques de verre disposées vers l'extérieur.

Dans le document US-A-4121 014 on décrit un produit composé comportant une plaque de polycarbonate, ce document n'enseigne pas comment empêcher la déformation de la plaque de polycarbonate lors de la fabrication du produit.

La présente invention concerne un procédé de fabrication d'un vitrage composite du genre de ceux comportant une plaque de verre, eventuellement feuilletée, un film de polyuréthane, avec interposition entre les deux d'une feuille de butyral de polyvinyle, et une plaque de polycarbonate et elle est remarquable en ce que, après avoir empilé les constituants, on accole une plaque rigide contre le plaque de polycarbonate, en ce qu'on maintient ladite plaque rigide par des bandes, réalisées en une matière thermorétractable, en ce qu'on soumet l'ensemble à une opération de calendrage, en ce qu'on place l'ensemble dans un autoclave et, enfin, en ce qu'on retire la plaque rigide à la sortie de l'autoclave.

De cette façon, la réalisation du vitrage peut être obtenue en une seule opération car on a constaté que le polyuréthane adhère bien au PVB et adhère directement au polycarbonate par un calendrage effectué sous une température de 120° à 200° C suivi d'un passage à l'autoclave sous une pression de dix à quinze Bars.

Selon une autre caractéristique de l'invention, le "sandwich" constitué par l'empilage des éléments précités est entouré, préalablement au calendrage, par des bandes disposées en croix réalisées en une matière thermorétractable telle qu'un tissu de verre présentant une face adhésive.

De cette façon, on a constaté qu'on empêchait la plaque de polycarbonate de se déformer.

Cependant, l'expérience a montré que les fours actuels, ayant une régulation par "tout ou rien", ne convenaient pas pour la mise en oeuvre du procédé décrit ci-dessus,car ils émettent un rayonnement infrarouge très important qui porte la température interne du " sandwich" à une valeur bien supérieure à celle ambiante du four.

De ce fait, la plaque de polycarbonate est surchauffée et perd ses qualités physiques.

La solution consistant à augmenter la vitesse de défilement du " sandwich" dans le four n'a pas donné de bons résultats car,dans ce cas, la couche la plus interne de butyral de polyvinyle ou celle du film polyuréthane n'était pas portée à la bonne température.

Ces phénomènes s'expliquent par le fait qu'une feuille plastique est d'autant plus facilement traversée par un rayonnement qu'elle est mince.

Dès lors, la plaque de polycarbonate dont l'épaisseur est de plusieurs millimètres s'échauffe plus vite que celles du butyral dont l'épaisseur est de l'ordre de 0,4 millimètre.

Selon l'invention, on remédie à ces inconvénients en réalisant le vitrage en trois phases consistant :

1° - à réaliser un sandwich comportant une plaque de polycarbonate, un film de polyuréthane, une feuille de butyral de polyvinyle et une plaque de verre et à soumettre ce sandwich à un calendrage;

2° - à ajouter sur la plaque de verre d'autres plaques de verre avec interposition de feuilles de butyral de polyvinyle et à soumettre l'ensemble à une nouvelle opération de calendrage ;

3° - à passer l'ensemble à l'autoclave.

De cette façon, il est possible d'utiliser les fours actuels sans risquer d'altérer les qualités du polycarbonate.

L'invention sera mieux comprise par la description qui va suivre, faite en se référant aux dessins annexés à titre d'exemple indicatif sur lesquels:

La figure 1 est une vue schématique en coupe montrant un mode de réalisation d'un vitrage conforme à l'invention;

La figure 2 est une vue d'un vitrage en cours d'élaboration ;

La figure 3 est une vue analogue à la figure 1 montrant un autre mode de réalisation ;

La figure 4 est une vue analogue montrant un troisième mode de réalisation ;

La figure 5 est une vue en coupe illustrant la première phase d'un procédé de fabrication ;

La figure 6 est une vue illustrant la seconde phase du procédé;

La figure 7 est une vue en coupe illustrant une variante de réalisation.

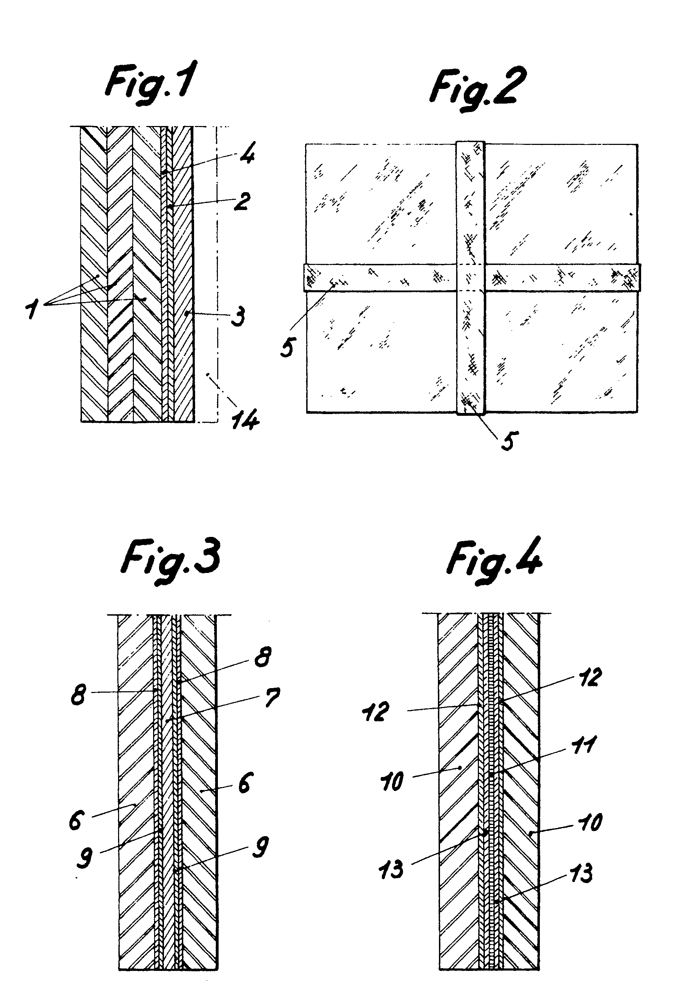

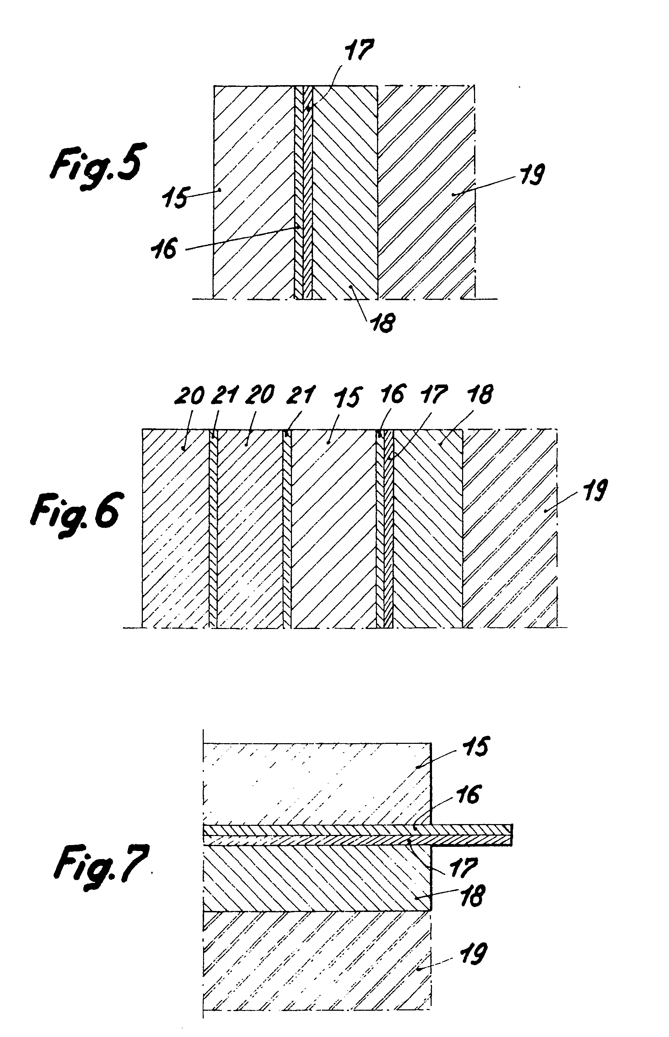

En se reportant aux dessins et,notamment, à la figure 1, on voit que le vitrage est constitué par l'empilage d'une plaque de verre 1, feuilletée de préférence, d'un film polyuréthane 2 et d'une plaque de polycarbonate 3,une feuille 4 de butyral de polyvinyle étant interposée entre le verre et le film polyuréthane.

L'épaisseur du verre feuilleté est de l'ordre de vingt à trente millimètres, celle de la feuille de butyral de polyvinyle de l'ordre de 0,4 millimètre, celle du film polyuréthane de l'ordre de 0,38 à 0,6 millimètre, tandis que celle de la plaque de polycarbonate est d'au moins deux millimètres et, de préférence, de trois millimètres.

Le film de polyuréthane est un polyuréthane aliphatique polyéther ou polyester.

L'ensemble ainsi décrit est entouré,selon deux directions perpendiculaires et parallèles à ses faces, par des bandes 5 (figure 2) réalisées en une matière légèrement thermorétractable, telle qu'un tissu de verre ayant une face adhésive, puis est soumis à une opération de calendrage dans un four tunnel chauffé à une température comprise entre 120° et 200° C de façon à réaliser un précollage.

Pour fixer les idées, le four a une longueur d'une douzaine de mètres et la vitesse de défilement est de l'ordre de 0,50 à 1,5 mètrespar minute. Un résultat optimal est obtenu avec une température de 170° C pour une vitesse de défilement de 0,6 mètre/minute.

Ensuite, l'ensemble est passé à l'autoclave sous une pression de dix à quinze Bars et à une température de l'ordre de 120° à 200° C pendant une durée d'environ quatre à sept heures. De préférence, la température est de 130° C et le vitrage doit être maintenu pendant au moins deux heures à cette température.Lorsque l'ensemble est refroidi, on enlève les bandes 5.

La figure 3 montre un autre mode de réalisation comportant extérieurement deux plaques de verre 6, au centre une plaque 7 de polycarbonate et entre elles une feuille 8 de butyral de polyvinyle et un film 9 de polyuréthane 2.

L'épaisseur de l'ensemble est de l'ordre de douze millimètres et le procédé de fabrication est le même que celui décrit pour le premier mode de réalisation.

La figure 4 montre un troisième mode de réalisation comportant extérieurement deux plaques de verre 10 de six à cinquante millimètres d'épaisseur et au centre un film polyester 11, de l'ordre de 175 à 600 microns d'épaisseur, l'ensemble étant assemblé à l'aide de feuilles 12 de butyral de polyvinyle et de films 13 de polyuréthane.Le procédé de fabrication est également le même que celui décrit à propos du premier mode de réalisation.

Le verre composite peut être constitué par un empilage de plaques de verre entre lesquelles est interposé un film polyuréthane ( non représenté).

Par ailleurs, pour éviter la déformation de la plaque de polycarbonate 3 durant le calendrage, une plaque 14 rigide est accolée extérieurement au polycarbonate. Cette plaque, qui est maintenue par les bandes 5, est réalisée en une matière,laissant passer les rayonnements infrarouges, telle que le verre.Le retrait des bandes à la sortie de l'autoclave détermine celui de la plaque 14.

L'épaisseur de la plaque 14 est d'au moins quatre millimètres.

On va maintenant décrire en regard des figures 5 à 7 un procédé de fabrication en plusieurs phases.

On voit que la première phase du procédé consiste à réaliser un sandwich comportant une plaque 15 de verre, une feuille 16 de butyral de polyvinyle,un film 17 de polyuréthane et une plaque 18 de polycarbonate.

Comme décrit ci-dessus, une plaque 19, de verre par exemple, est accolée à la plaque 18 et maintenue éventuellement par des bandes thermorétractables (non représentées).

La plaque 15 de verre peut être remplacée par plusieurs plaques de verre avec interposition de feuilles de butyral.

L'ensemble est ensuite passé dans un four de calendrage.De préférence, les organes chaufants du four sont disposés au-dessus du vitrage.

L'expérience a montré que la température d'ambiance du four doit être de l'ordre de 175° C et le sandwich doit présenter à la sortie du four une température externe de l'ordre de 60 à 90° C.

La deuxième phase du procédé consiste à ajouter des plaques 20 de verre sur celle 15 en intercalant entre elles des feuilles 21 de butyral puis à passer l'ensemble dans un four de calendrage de façon à ce qu'à la sortie dudit four la température externe du vitrage soit de l'ordre de 50° C.

La troisième phase du procédé consiste à placer le "sandwich" de la figure 2 dans un autoclave.

Selon un mode de réalisation, le passage à l'autoclave s'effectue, après la mise sous pression de l'ordre de huit à quinze bars, par paliers de température successifs.

Ainsi, pour un premier palier l'autoclave sera porté à une température de l'ordre de 100° C pendant environ dix minutes, suivi d'un second palier d'une durée de quinze minutes sous une température de l'ordre de 120° C et, enfin, d'un dernier palier d'une durée de quarante à cinquante minutes sous une température de l'ordre de 130° C. Ensuite, on abaisse lentement la pression pour éviter un brusque refroidissement.

Selon un autre mode de réalisation, un bon résultat peut être obtenu en maintenant dans l'autoclave la température à environ 115° C pendant une heure.

On sait que le calendrage réalise un précollage des éléments en contact, l'assemblage définitif n'étant assuré que lors du passage dans l'autoclave.

Cependant, pour diverses raisons, il peut être intéressant de laisser s'écouler un certain temps entre la première et la seconde phase.

Dans ce cas, la première phase est suivie immédiatement d'un passage à l'autoclave.

Selon un autre mode de réalisation du procédé, le vitrage définitif peut être réalisé à l'aide de deux vitrages associés réalisés chacun selon le procédé de l'invention et comportant pour l'un les éléments 15 à 18 et, pour l'autre, des plaques de verre 20 collées entre elles par du butyral.

L'association des deux vitrages élémentaires s'effectue à l'aide d'une feuille de butyral après calendrage et passage à l'autoclave.

Un vitrage réalisé selon le procédé de l'invention peut comporter les éléments suivants:
- une plaque de verre de trois à cinq millimètres d'épaisseur ;
- une feuille de butyral de 0,38 millimètre d'épaisseur ;
- une deuxième plaque de verre de dix à quinze millimètres d'épaisseur ;
- une feuille de butyral de 0,38 millimètre d'épaisseur ;
- une troisième plaque de verre de dix à quinze millimètres d'épaisseur;
- une feuille épaisse de butyral de 1,52 à 3,04 millimètres d'épaisseur ;
- un film de polyuréthane de 0,45 millimètre d'épaisseur;
- une plaque de polycarbonate de cinq cents microns à douze millimètres d'épaisseur.

Le procédé de l'invention se propose aussi de modifier le mode d'empilage des éléments.

Selon la technique actuelle, les plaques de butyral et la feuille de polyuréthane présentent des dimensions supérieures à celles des plaques de verre et de polycarbonate,la matière en excédent étant enlevée dès que l'empilage est réalisé. Mais, on a constaté qu'un vitrage ainsi réalisé présentait des défauts à sa périphérie dus vraisemblablement au retrait des éléments plastiques (butyral et polyuréthane).

Selon l'invention, on laisse dépasser le butyral et le polyuréthane d'environ un centimètre ( figure 7) et on soumet le sandwich à une opération de calendrage, la matière en surplus étant enlevée à la sortie du four de calendrage.

Le procédé de l'invention se trouve amélioré si on utilise des feuilles de butyral "tramées" sur les deux faces, c'est-à-dire présentant des protubérances et un film de polyuréthane tramé sur une face, la face lisse dudit film étant placée contre la face tramée de la feuille de butyral.On pourrait utiliser un film de polyuréthane tramé sur ses deux faces.

Bien entendu, la présente invention ne se limite pas aux modes de réalisations décrits et représentés mais s'étend,au contraire, à toutes variantes de formes et dimensions.

C'est ainsi,entre autres, que le procédé de l'invention peut être appliqué à la réalisation de vitrages comportant plusieurs plaques de polycarbonate.

C'est ainsi,encore, que le procédé de l'invention est amélioré si tous les vitrages sont maintenus, à la sortie du four de calendrage, à une température qui n'est pas inférieure à 35 à 40° C, la température desdits vitrages ne devant pas descendre au-dessous de cette valeur entre le moment où ils sortent du four et celui où ils sont introduits dans l'autoclave.

**Revendications**

1. Procédé de fabrication d'un vitrage composite du genre de ceux comportant une plaque de verre, éventuellement feuilletée, un film de polyuréthane, avec interposition entre les deux d'une feuille de butyral de polyvinyle, et une plaque de polycarbonate caractérisé en ce que, après avoir empilé les constituants, on accole une plaque rigide (14-19) contre la plaque de polycarbonate en ce qu'on maintient ladite plaque rigide par des bandes (5), réalisées en une matière thermorétractable, en ce qu'on soumet l'ensemble à une opération de calendrage, en ce qu'on place l'ensemble dans un autoclave et, enfin, en ce qu'on retire la plaque rigide à la sortie de l'autoclave.

2. Procédé de fabrication d'un vitrage composite, selon la revendication 1, caractérisé en ce que les bandes (5) sont réalisées en un tissu de verre présentant une face adhésive.

3. Procédé de fabrication d'un vitrage composite, selon l'une quelconque des revendications 1 et 2, éventuellement avec des feuilles de butyral de polyvinyle dans la plaque de verre (20-15), consistant lors de l'empilage des constituants à laisser dépasser les feuilles de butyral de polyvinyle et le film de polyuréthane et à enlever la matière en excès à la sortie du four de calendrage.

4. Procédé de fabrication d'un vitrage composite, selon la revendication 3, consistant à utiliser des feuilles de butyral de polyvinyle tramées sur leurs deux faces et un film de polyuréthane tramé sur une face et à disposer la face lisse dudit film contre la feuille de butyral de polyvinyle.

## Claims

1. Process for the manufacture of a composite glazing of the kind consisting of a glass plate, possibly laminated, a polyurethane film, with interposition between the two of a polyvinyl butyral sheet, and a polycarbonate plate, wherein after having stacked the constituents, a rigid plate (14-19) is placed next to the polycarbonate plate, said rigid plate is maintained by strips (5), consisting of a heat shrinkable material, wherein the set of constituents is subjected to a calendering process then placed in an autoclave and, finally, wherein the rigid plate is recovered on leaving the autoclave.

2. Process for the manufacture of a composite glazing according to claim 1 wherein the strips (5) consist of a glass fabric having an adhesive surface.

3. Process for the manufacture of a composite glazing, according to either one of claims 1 and 2, possibly with polyvinyl butyral sheets in the glass plate (20-15), which consists, during the course of the constituent stacking process, in allowing the polyvinyl butyral sheets and polyurethane film to protrude and removing excess material at the outlet of the calendering oven.

4. Process for the manufacture of a composite glazing according to claim 3 which consists in using polyvinyl butyral sheets woven on both sides and a polyurethane film woven on one side and placing the smooth side of said film on the polyvinyl butyral sheet.

## Patentansprüche

1. Fertigungsverfahren für eine Kompositverglasung, bestehend aus einer Glasplatte - evtl. aus Verbundglas - einer Polyurethanfolie, einer dazwischengelegten Polyvinyl-Butyralfolie und einer Polycarbonatplatte, **dadurch gekennzeichnet,** daß nach dem Übereinanderlegen der Komponenten eine steife Platte (14-19) gegen die Polycarbonatplatte gedrückt und durch Bänder (5) aus Wärmeschrumpfmaterial festgehalten wird, daß die Baugruppe einer Kalandrierung unterzogen und anschließen autoklaviert wird und daß die steife Platte nach dem Autoklavieren entfernt wird.

2. Fertigungsverfahren für eine Kompositverglasung nach Patentanspruch 1, **dadurch gekennzeichnet,** daß die Bänder (5) aus einem Glasfasergewebe mit Klebefläche bestehen.

3. Fertigungsverfahren für eine Kompositverglasung nach Patentanspruch 1 oder 2, eventuell mit Polyvinyl-Butyralfolien in der Glasplatte (20-15), das darin besteht, daß beim Übereinanderlegen der Komponenten die Polyvinyl-Butyralfolien und die Poyurethanfolie überstehen und das überschüssige Material beim Austritt aus dem Kalandrierofen entfernt wird.

4. Fertigungsverfahren für eine Kompositverglasung nach Patentanspruch 3, das darin besteht, daß Polyvinyl-Butyralfolien mit Rastern auf beiden Seiten und eine Polyurethanfolie mit einseitigem Raster verwendet werden und daß die glatte Seite der Polyurethanfolie auf der Polyvinyl-Butyralfolie aufliegt.

Fig.1

Fig.2

Fig.3

Fig.4

**Fig.5**

17

15

16

19

18

**Fig.6**

20 21 20 21 15 16 17 18

19

**Fig.7**

15

16

17

18

19